# EUROPÄISCHE PATENTANMELDUNG

(11) **EP 4 008 189 A1**
(43) Veröffentlichungstag der Anmeldung: **08.06.2022**
(21) Anmeldenummer: 21203624.8
(22) Anmeldetag: 20.10.2021
(51) Int. Cl.: A23G 3/02, A23G 1/20

(54) **SÜSSWARENMASSENDOSIEREINHEIT MIT SPERRVENTIL UND DOSIERVENTIL**

(30) Priorität: 07.12.2020 DE 102020132509
(71) Anmelder: Sollich KG, 32105 Bad Salzuflen (DE)
(72) Erfinder: Stolpe, Kersten, 32107 Bad Salzuflen (DE); Ellinghoven, Thomas, 32049 Herford (DE)
(74) Vertreter: REHBERG HÜPPE + PARTNER

(57) **Zusammenfassung**

Eine Vorrichtung (1) zum Dosieren einer Süßwarenmasse weist eine Mehrzahl von nebeneinander angeordneten Süßwarenmassendosiereinheiten (2) auf. Jede der Süßwarenmassendosiereinheiten (2) weist ein Sperrventil (18), ein Dosierventil (22) und eine Auslassöffnung (26) auf. Die Auslassöffnung (26) dient zum Auslassen einer Dosiermenge an Süßwarenmasse aus der Süßwarenmassendosiereinheit (2). Das Dosierventil (22) dient zum Einstellen der Dosiermenge. Das zusätzlich zum Dosierventil (22) vorhandene Sperrventil (18) dient zum abwechselnden Öffnen und Schließen, wobei bei geschlossenem Sperrventil (18) keine Süßwarenmasse aus der Auslassöffnung (26) austritt.

## Beschreibung

### TECHNISCHES GEBIET DER ERFINDUNG

Die Erfindung betrifft eine Süßwarenmassendosiereinheit und eine Vorrichtung zum Dosieren einer Süßwarenmasse mit einer Mehrzahl von Süßwarenmassendosiereinheiten.

Süßwarenmassendosiereinheiten dienen zur taktweisen Abgabe einer definierten Masse bzw. eines definierten Volumens einer Süßwarenmasse aus einem Süßwarenmassenreservoir während der Herstellung von Süßwaren. Bei der Süßwarenmasse handelt es sich insbesondere um eine Fett und/oder Zucker und/oder Zuckerersatzstoffe enthaltende Masse. Beispiele hierfür sind Karamell, Fondant, Schokolademasse, Fettglasur usw. Die dosierte Portion der Süßwarenmasse stellt dann insbesondere das fertige Süßwarenprodukt selbst, eine Füllung des fertigen Süßwarenprodukts oder einen Überzug des fertigen Süßwarenprodukts dar.

Um das gleichzeitige Dosieren einer Mehrzahl von Portionen der Süßwarenmasse zu ermöglichen, weist die Vorrichtung eine Mehrzahl derartiger Süßwarenmassendosiereinheiten auf. Die Vorrichtung kann dann insbesondere relativ zu einem Förderband taktweise bewegt werden, um die Dosierung innerhalb eines automatisierten Herstellungsverfahrens durchzuführen.

### STAND DER TECHNIK

Aus der internationalen Patentanmeldung WO 2016/010435 A1 ist eine Vorrichtung zum Dosieren einer Süßwarenmasse mit einer Mehrzahl von nebeneinander angeordneten Süßwarenmassendosiereinheiten bekannt. Die Süßwarenmassendosiereinheiten werden über ein gemeinsames Reservoir mit Süßwarenmasse versorgt. Jede der Süßwarenmassendosiereinheiten weist eine Auslassöffnung zum Auslassen einer Dosiermenge an Süßwarenmasse aus der Süßwarenmassendosiereinheit auf. Die Süßwarenmassendosiereinheiten weisen jeweils ein Dosier- und Sperrventil auf, das als regelbares Quetschventil ausgebildet ist. Mit dem Quetschventil werden die Dosiermenge und der Zeitpunkt der Abgabe der Dosiermenge bestimmt.

Eine weitere Vorrichtung zum Dosieren einer Süßwarenmasse mit einer Mehrzahl von nebeneinander angeordneten Süßwarenmassendosiereinheiten ist aus der europäischen Patentanmeldung EP 2 941 962 A1 bekannt. Die Süßwarenmassendosiereinheiten werden über ein gemeinsames Reservoir mit Süßwarenmasse versorgt. Jede der Süßwarenmassendosiereinheiten weist eine Auslassöffnung zum Auslassen einer Dosiermenge an Süßwarenmasse aus der Süßwarenmassendosiereinheit auf. Die Süßwarenmassendosiereinheiten weisen jeweils ein Dosier- und Sperrventil auf, das durch das Zusammenwirken eines Grundkörpers, eines Drehkolbens, eines Verschlussteils und einer Auslassdüse gebildet wird. Mit diesem Ventil werden die Dosiermenge und der Zeitpunkt der Abgabe der Dosiermenge bestimmt. Dabei sind der Drehkolben und das Verschlussteil unabhängig voneinander mechanisch taktweise angetrieben.

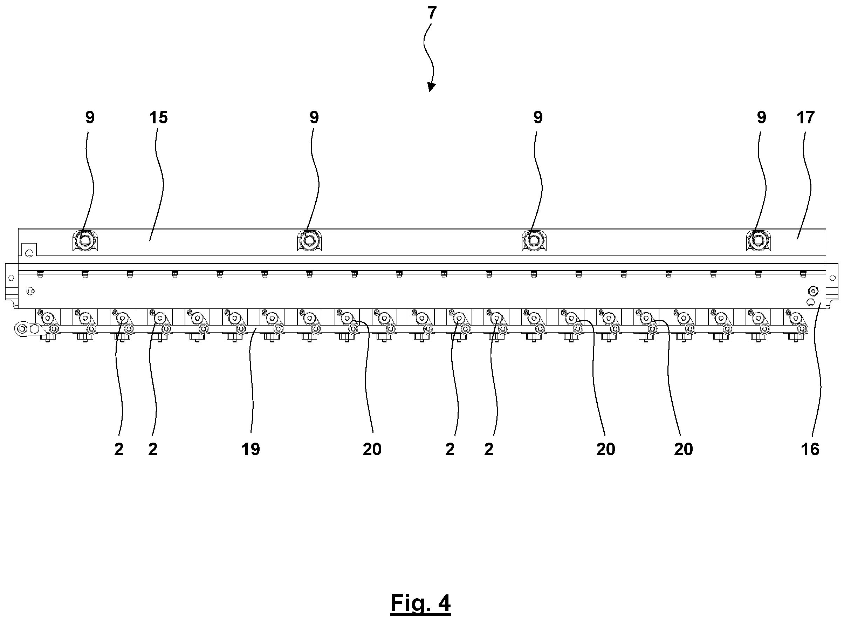

Eine Vorrichtung zum Herstellen dreidimensionaler Objekte aus Lebensmittelmasse ist aus dem US-amerikanischen Patent US 6,280,784 B1 bekannt. Bei dem Objekt handelt es sich z. B. um einen individuell kreierten Geburtstagskuchen. Gemäß Fig. 4 weist die Vorrichtung eine Dosier-Zahnradpumpe und zwei stromabwärts angeordnete Ventilmittel auf, die jeweils ein Sperrventil aufweisen. Über die beiden Ventilmittel können unterschiedliche Massen - beispielsweise Massen unterschiedlicher Farben - abgegeben werden.

### AUFGABE DER ERFINDUNG

Der Erfindung liegt die Aufgabe zugrunde, eine Süßwarenmassendosiereinheit und eine Vorrichtung mit einer Mehrzahl derartiger Süßwarenmassendosiereinheiten zur taktweisen Abgabe einer Dosiermenge an Süßwarenmasse bereitzustellen, mit denen bei einer langen Lebensdauer der Süßwarenmassendosiereinheit die Dosiermenge exakt eingestellt werden kann.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine Süßwarenmassendosiereinheit mit einer Auslassöffnung zum Auslassen einer Dosiermenge an Süßwarenmasse aus der Süßwarenmassendosiereinheit und einem Dosierventil zum Einstellen der Dosiermenge. Zusätzlich zu dem Dosierventil weist die Süßwarenmassendosiereinheit ein separates Sperrventil zum abwechselnden Öffnen und Schließen auf. Bei geschlossenem Sperrventil tritt keine Süßwarenmasse aus der Auslassöffnung aus.

Die Erfindung betrifft weiterhin eine Vorrichtung zum Dosieren einer Süßwarenmasse mit einer Mehrzahl von nebeneinander angeordneten derartigen Süßwarenmassendosiereinheiten.

Eine solche Vorrichtung weist einen Dosierbalken auf, deren Teil die Süßwarenmassendosiereinheiten sind. Der Dosierbalken ("Manifold") ist über einem Förderband angeordnet. Das Förderband wird in einem Förderrichtungssinn beweglich angetrieben. Der Dosierbalken dient zur Aufbringung der Dosiermengen an Süßwarenmasse mit den Süßwarenmassendosiereinheiten auf das Förderband bzw. auf dort aufliegende Süßwarenstücke während eines Dosiertakts.

Auf dem Förderband liegt üblicherweise eine Vielzahl von Süßwarenstücken. Die Süßwarenstücke befinden sich in sich senkrecht zum Förderrichtungssinn erstreckenden Reihen und in sich im Förderrichtungssinn (bzw. der Förderrichtung) erstreckenden Spalten. In jeder der ordnungsgemäß ausgebildeten Reihen befindet sich eine definierte Anzahl von Süßwarenstücken. Diese Anzahl stimmt mit der Anzahl von Süßwarenmassendosiereinheiten überein.

Der Dosierbalken wird mittels eines motorischen Antriebs vertikal und horizontal bewegt. Das obere Trum des Förderbands wird kontinuierlich im Förderrichtungssinn bewegt. Der Dosierbalken wird während eines Dosiertakts mit dem Förderband und somit auch den Süßwarenstücken mitbewegt, so dass die Dosierung der Süßwarenmasse auf das jeweilige Süßwarenstück erfolgt. Es wäre aber auch möglich, dass das Förderband getaktet angetrieben und der Dosierbalken feststehend ist.

Bei der Süßwarenmasse handelt es sich insbesondere um eine Fett und/oder Zucker und/oder Zuckerersatzstoffe enthaltende Masse. Beispiele hierfür sind Karamell, Fondant, Schokolademasse, Fettglasur usw. Die dosierte Portion der Süßwarenmasse stellt dann insbesondere das fertige Süßwarenprodukt selbst, eine Füllung des fertigen Süßwarenprodukts oder einen Überzug des fertigen Süßwarenprodukts dar. Die Süßwarenmasse liegt in fließfähiger Form vor. Es ist auch möglich, eine Differenzgeschwindigkeit zwischen dem Transportband und dem Dosierbalken so einzustellen, dass sich die Süßwarenmasse strichförmig ablagert.

Eine Süßwarenmassendosiereinheit zum getakteten Ausgeben einer definierten Dosiermenge weist im Wesentlichen die folgenden zwei Funktionen auf:
Die erste Funktion ("Primärfunktion") ist die des Öffnens und Schließens des Auslasses, was dem Abgeben bzw. dem Nichtabgeben von Süßwarenmasse zugeordnet ist. Dieses Abgeben und Nichtabgeben wechselt sich taktweise ab. Es wechseln sich also ein Dosiertakt und ein Sperrtakt ab. Es handelt es sich um die Hauptfunktion, die während des störungs- und fehlerfreien Normalbetriebs der Süßwarenmassendosiereinheit immer auftritt. Diese Primärfunktion muss bei einem effizienten automatisierten Betrieb der Süßwarenmassendosiereinheit sehr häufig pro Zeiteinheit erfüllt werden. So kann es durchaus sein, dass pro Süßwarenmassendosiereinheit 100 oder mehr Dosiermengen pro Minute dosiert werden und dementsprechend 100 mal geöffnet und 100 mal geschlossen werden muss. Aus dieser häufig vorkommenden Primärfunktion ergibt sich eine entsprechend hohe Beanspruchung des die Primärfunktion erbringenden Bauteils. In dem oberhalb beschriebenen Dokument des Stands der Technik EP 2 941 962 A1 wird diese Primärfunktion mittels eines Quetschventils erbracht. Derartige Quetschventile weisen typischerweise Elastomermembranen auf, die für das Schließen des Quetschventils mit Druck beaufschlagt werden. Bei einer derart häufig wechselnden Druckbeaufschlagung besteht die Gefahr, dass die Elastomermembranen nach einer vergleichsweise kurzen Betriebsdauer reißen. Hieraus resultieren unerwünschte Stillstandszeiten der bekannten Vorrichtung.

Die zweite zu erfüllende Funktion ("Sekundärfunktion") ist die der Einstellung der Dosiermenge. Dies ist die Menge (bzw. das Volumen) an Süßwarenmasse, die während eines Dosiertakts durch eine Süßwarenmassendosiereinheit abgegeben wird.

Die neue Süßwarenmassendosiereinheit trennt nun die Primärfunktion und die Sekundärfunktion strukturell voneinander und erbringt diese mit unterschiedlichen und separaten Bauteilen. Es handelt sich um Ventile mit unterschiedlichen Eigenschaften. Durch die Entkopplung der Funktionen muss die Sekundärfunktion nun deutlich weniger häufig als bisher erbracht werden. Die Sekundärfunktion muss nur erbracht werden, wenn sich die Verhältnisse an der jeweiligen Süßwarenmassendosiereinheit geändert haben oder andere Änderungen vorliegen. Ohne solche Änderungen bleibt die Einstellung unverändert.

Das Sperrventil kann ein Sperrventilgehäuse und das Dosierventil ein Dosierventilgehäuse aufweisen. Es handelt sich dann also um unterschiedliche Gehäuse.

Die Primärfunktion wird durch ein Sperrventil erbracht. Das Sperrventil weist eine geöffnete Stellung und eine geschlossene Stellung auf. In der geöffneten Stellung kann die Dosiermenge an Süßwarenmasse aus der Auslassöffnung der Süßwarenmassendosiereinheit austreten. In der geschlossenen Stellung des Sperrventils wird die Süßwarenmasse an einem Austritt aus der Auslassöffnung gehindert. Das Sperrventil ist so ausgebildet, dass es die häufig zu erbringende Primärfunktion verschleißarm und über eine lange Lebensdauer erbringen kann.

Die Sekundärfunktion wird durch ein zusätzlich zu und separat von dem Sperrventil in der Süßwarenmassendosiereinheit angeordnetes Dosierventil erbracht. Dieses Dosierventil kann nicht nur eine vollständig geschlossene und eine vollständig geöffnete Stellung, sondern auch Zwischenstellungen einnehmen. Über diese Zwischenstellungen kann die Dosiermenge an Süßwarenmasse eingestellt werden. Das Dosierventil ist so ausgebildet, dass es die eher selten zu erbringende Sekundärfunktion exakt und effizient erbringen kann.

Eine solche Vorrichtung mit einer Mehrzahl derartiger Süßwarenmassendosiereinheiten wird vom Fachmann auch als "Manifold" bezeichnet. Mit derartigen Vorrichtungen werden z. B. Kekse oder andere Gebäckstücke mit Süßwarenmassen befüllt oder mit Schokolade oder einer Glasur überzogen. Die zu befüllenden oder zu überziehenden Süßwarenstücke werden dabei auf einem Förderband in mehreren Reihen nebeneinander durch den Bereich der Vorrichtung transportiert. Das Förderband wird dabei insbesondere kontinuierlich angetrieben, während die Vorrichtung getaktet angetrieben ist. Jedenfalls die Abgabe der Süßwarenmasse erfolgt nicht kontinuierlich, sondern nur zeitweise. Die Abgabe erfolgt insbesondere, während die Vorrichtung zeitweise mit einer Reihe von Süßwarenstücken mitbewegt wird. Anschließend kehrt die Vorrichtung an ihren Ausgangsort zurück und verfolgt die nächste Reihe von Süßwarenstücken. Es ist aber auch möglich, dass die Vorrichtung nicht bewegt wird und das Förderband getaktet angetrieben ist. In diesem Fall erfolgt die Dosierung bei stillstehendem Förderband.

Das Dosierventil ist ein durch Druck beaufschlagtes Ventil. Die Druckbeaufschlagung erfolgt dabei durch ein Druckmedium. Bei dem Druckmedium kann es sich um ein Gas oder eine Flüssigkeit handeln. Beispielsweise handelt es sich um Luft, Wasser oder Öl. Durch die Druckbeaufschlagung ist der durch das Dosierventil zu bestimmende Volumenstrom an Süßwarenmasse exakt und schnell einstellbar. Der Volumenstrom wird durch eine Änderung der freien Querschnittsfläche des Ventils definiert, die für den Durchfluss der Süßwarenmasse zur Verfügung steht. Bei einem tendenziellen Öffnen des Dosierventils wird diese freie Querschnittsfläche also vergrößert. Bei einem tendenziellen Schließen des Dosierventils wird diese freie Querschnittsfläche verkleinert. Durch eine Änderung der Querschnittsfläche von etwa ± 3 % bis 30 %, insbesondere etwa ± 5 % bis 20 %, insbesondere etwa ± 10 % bis 15 %, lässt sich häufig die gewünschte und benötigte Einstellung des Dosierventils realisieren.

Wenn es sich bei dem Druckmedium um Luft handelt, kann der normalerweise an dem Dosierventil anliegende Druck etwa 0,4 bar bis 0,7 bar, insbesondere etwa 0,5 bar, betragen. Die Variierung des Drucks zur Einstellung des Dosierventils beträgt dann z. B. etwa ± 0,3 bar.

Bei dem Dosierventil kann es sich um ein Schlauchquetschventil handeln. Ein derartiges Schlauchquetschventil ist gut dafür geeignet, durch eine Variierung des Drucks in der oberhalb beschriebenen Weise den freien Querschnitt des Dosierventils schnell und exakt einzustellen. Ein derartiges Schlauchquetschventil weist ein Gehäuse auf, in das ein aus einem nachgiebigen Material bestehendes Schlauchstück eingesetzt ist. In dem Gehäuse ist ein Druckraum vorhanden, der druckmäßig beaufschlagt werden kann. Das Schlauchstück wird dann in Abhängigkeit von dem in dem Druckraum anstehenden Druck mehr bzw. weniger gequetscht, so dass sich der freie Querschnitt verkleinert bzw. vergrößert.

Die Elastomermembran des Schlauchquetschventils kann insbesondere als Silikon-Spritzgussteil ausgebildet sein. Andere Materialien und Herstellungsverfahren sind aber ebenfalls möglich.

Das Dosierventil kann auch so ausgebildet sein, dass darüber nicht nur die Dosiermenge, sondern auch die Geometrie der dosierten Süßwarenmasse einstellbar ist. Das Dosierventil kann auch in besonderen Fällen, insbesondere Fehlerfällen, vorübergehend die Primärfunktion des Sperrventils für die jeweilige Süßwarenmassendosiereinheit übernehmen.

Das Dosierventil kann stufenlos regelbar ausgebildet sein. Hierdurch lässt sich die gewünschte Variierung des freien Querschnitts des Dosierventils und somit der Volumenstrom und die Dosiermenge exakt einstellen. Es ist aber auch möglich, dass diese Einstellung abgestuft gewählt werden kann. Die Regelung des Dosierventils bedeutet eine Regelung der Öffnungsgröße des Dosierventils. Anders gesagt handelt es sich um eine Einstellung der Drosselung des Dosierventils.

Das Dosierventil kann während des Betriebs der Süßwarenmassendosiereinheit von Hand oder automatisch regelbar ausgebildet sein. Zum Einstellen des Dosierventils muss dann also die Süßwarenmassendosiereinheit bzw. die Vorrichtung, deren Teil die Süßwarenmassendosiereinheit ist, nicht angehalten und der Produktivbetrieb nicht unterbrochen werden. Bei einer Einstellung von Hand beobachtet der Bediener die Dosierergebnisse und verändert bei einer Abweichung der Dosierergebnisse vom Sollwert die Dosiermenge des jeweiligen Dosierventils. Eine automatische Regelung ist aber ebenfalls möglich.

Die unterschiedliche Einstellung der Dosierventile der unterschiedlichen Süßwarenmassendosiereinheiten in der gemeinsamen Vorrichtung ergibt sich auch dadurch, dass diese unterschiedlich angeordnet sind und daher unterschiedliche Druckverhältnisse vorliegen. Diese unterschiedlichen Druckverhältnisse werden nun durch unterschiedliche Einstellungen des Dosierventils ausgeglichen, so dass trotz dieser unterschiedlichen Verhältnisse eine übereinstimmende Dosiermenge der Dosierventile erreicht wird. Es ist aber auch möglich, bewusst unterschiedliche Dosiermengen der einzelnen Dosierventile einzustellen und damit unterschiedliche Süßwarenstücke in einer Reihe herzustellen.

Das Sperrventil kann ein mechanisch betätigtes Ventil sein. Durch diese mechanische Betätigung ist das Sperrventil besonders robust und weist eine lange Lebensdauer auf. Dies spiegelt die oberhalb beschriebene Trennung der Primärfunktion und der Sekundärfunktion wieder. Die Primärfunktion ist also dem robusten mechanisch betätigten Sperrventil und die Sekundärfunktion dem exakt einstellbaren durch Druck beaufschlagten Dosierventil zugewiesen.

Bei dem Sperrventil kann es sich z. B. um ein Drehkolbenventil, ein Schieberventil, ein Sitzventil oder ein anderes geeignetes Ventil handeln, welches mindestens eine vollständig geöffnete Stellung und eine vollständig geschlossene Stellung aufweist. Es ist aber auch möglich, dass dieses Ventil Zwischenstellungen besitzt.

Das Sperrventil kann taktweise geöffnet und geschlossen werden. Wie oberhalb beschrieben wurde, dient diese taktweise Betätigung der Erfüllung des Portioniervorgangs im Zusammenhang mit den geförderten Süßwarenstücken, die mit der Dosiermenge an Süßwarenmasse befüllt oder bezogen werden sollen.

In der Vorrichtung mit einer Mehrzahl von Süßwarenmassendosiereinheiten können die Sperrventile so ausgebildet sein, dass sie gemeinsam geöffnet und geschlossen werden. Eine derartige Betätigung ist konstruktiv einfacher umzusetzen, insbesondere indem die Sperrventile mechanisch miteinander gekoppelt werden. Die gemeinsame Betätigung der Sperrventile kann insbesondere über einen zentralen Aktuator erfolgen. Der Aktuator kann z. B. eine Koppelstange oder eine Ventilwelle aufweisen.

Es ist aber auch möglich, dass die Sperrventile so ausgebildet sind, dass sie unabhängig voneinander geöffnet und geschlossen werden können.

Bei einem störungsfreien und fehlerfreien Betrieb der Vorrichtung ist es nicht erforderlich, dass nur aus einem Teil der Auslassöffnungen Süßwarenmasse austritt oder ein Dosiertakt ausgelassen wird. Jedem Sperrventil ist ein Süßwarenstück einer Reihe auf dem Förderband zugeordnet, so dass auf jedes Süßwarenstück in dieser Reihe gleichzeitig die Dosiermenge aufgebracht wird. Etwas anderes kann sich aber ergeben, wenn in einer Reihe ein Süßwarenstück fehlt oder mehrere Süßwarenstücke fehlen. Damit dann keine Süßwarenmasse auf den leeren Platz auf dem Förderband gelangt, wo normalerweise das Süßwarenstück liegen sollte, muss mindestens verhindert werden, dass Süßwarenmasse aus dieser Auslassöffnung austritt.

Bei der gemeinsamen Betätigung der Sperrventile ist in einem solchen Fehlerfall eine erste Möglichkeit, dass eine vollständige Reihe ausgelassen wird, also während eines Dosiertakts keine Süßwarenmasse ausgegeben wird, da die Sperrventile geschlossen bleiben. Es entsteht dann eine Fehlreihe, die später vollständig ausgesondert wird.

Bei der gemeinsamen Betätigung der Sperrventile ist in einem solchen Fehlerfall eine zweite Möglichkeit, dass das der Fehlstelle zugeordnete Dosierventil während des Dosiertakts vollständig geschlossen wird. Dieses Dosierventil übernimmt dann also vorübergehend die Primärfunktion des Sperrventils. Die anderen Dosierventile erfüllen ganz normal ihre Sekundärfunktion. Es entsteht eine Reihe von Süßwarenstücken mit nur einer Fehlstelle, so dass die Reihe zwar ein Süßwarenstück weniger aufweist, aber vollständig genutzt werden kann.

Wenn die Sperrventile unabhängig voneinander betätigbar sind, kann in einem solchen Fehlerfall nur das Sperrventil geschlossen bleiben, das der Fehlstelle in der Reihe zugeordnet ist. Somit liegt zwar keine vollständige Reihe von mit der Dosiermenge an Süßwarenmasse versehenen Süßwarenstücken vor. Alle in dieser Reihe vorhandenen Süßwarenstücke sind aber ordnungsgemäß und können weiterverarbeitet werden.

Für die automatische Erkennung von Fehlern kann die Vorrichtung eine Fehlerdetektionsvorrichtung aufweisen, die so ausgebildet ist, dass sie bei Vorliegen eines Fehlers ein Fehlersignal ausgibt. Bei einem Fehler handelt es sich insbesondere um eine Fehlstelle (d. h. ein vollständig fehlendes Süßwarenstück), ein unvollständiges oder beschädigtes Süßwarenstück oder ein nicht korrekt an seinem Platz liegendes Süßwarenstück. Bei Vorliegen eines Fehlersignals wird eine der oberhalb beschriebenen Maßnahmen ergriffen.

Die Dosierventile der Mehrzahl von Süßwarenmassendosiereinheiten in der Vorrichtung können so ausgebildet sein, dass sie unabhängig voneinander regelbar sind. Hierdurch lässt sich die Dosiermenge jedes Dosierventils individuell einstellen. Diese Einstellung kann insbesondere vor dem Anfahren der Vorrichtung oder bei einem Produktwechsel erfolgen. Die Einstellung ist aber auch im laufenden Betrieb möglich, ohne dass die Vorrichtung angehalten werden muss.

Für die Einstellung der Dosierventile der Süßwarenmassendosiereinheiten kann die Vorrichtung eine Regeleinheit aufweisen. Die Regeleinheit weist eine Bedienerschnittstelle (HMI; "Human Machine Interface") auf, über die der Bediener die notwendigen Einstellungen vornehmen kann.

Die Regeleinheit kann so ausgebildet sein, dass sie berücksichtigt, dass das Dosiervolumen an einer ersten Süßwarenmassendosiereinheit ansteigt, wenn eine benachbarte zweite Süßwarenmassendosiereinheit (oder mehrere benachbarte Süßwarenmassendosiereinheit) nicht betätigt werden - d. h. deren Sperrventil oder Dosierventil nicht geöffnet ist. Dies ist auf den fehlenden Abzug von Süßwarenmasse durch die zweite Süßwarenmassendosiereinheit aus dem gemeinsamen Vorratsbehälter für Süßwarenmasse zurückzuführen. Der nicht gewünschte Erhöhung der Dosiermenge an der ersten Süßwarenmassendosiereinheit wird nun durch eine Reduzierung des freien Querschnitts des Dosierventils der ersten Süßwarenmassendosiereinheit entgegengewirkt.

Gemäß einer Variante a können die Regeleinheit und die Dosierventile so ausgebildet sein, dass die Dosierventile unabhängig voneinander regelbar sind. Die Sperrventile der Süßwarenmassendosiereinheiten sind dann so ausgebildet, dass sie gemeinsam geöffnet und geschlossen werden. Die Regeleinheit ist so ausgebildet, dass bei geöffneten Sperrventilen und geöffnetem Dosierventil einer ersten Süßwarenmassendosiereinheit und geschlossenem Dosierventil einer benachbarten zweiten Süßwarenmassendosiereinheit das Dosierventil der ersten Süßwarenmassendosiereinheit weiter geschlossen wird.

Gemäß einer Variante b können die Regeleinheit und die Dosierventile ebenfalls so ausgebildet sein, dass die Dosierventile unabhängig voneinander regelbar sind. Die Sperrventile der Süßwarenmassendosiereinheiten sind aber so ausgebildet, dass sie unabhängig voneinander geöffnet und geschlossen werden können. Die Regeleinheit ist so ausgebildet, dass bei geöffnetem Sperrventil einer ersten Süßwarenmassendosiereinheit und geschlossenem Sperrventil einer benachbarten zweiten Süßwarenmassendosiereinheit das Dosierventil der ersten Süßwarenmassendosiereinheit weiter geschlossen wird.

Bei einer automatisierten Regelung mit einem geschlossenen Regelkreis wird insbesondere die Dosiermenge an Süßwarenmasse auf Basis des Durchmessers des erzeugten Kleckses an Süßwarenmasse bestimmt. Wenn dieser Durchmesser kleiner als der Sollwert ist, wird das jeweilige Dosierventil weiter geöffnet. Wenn der Durchmesser größer als der Solldurchmesser ist, wird das jeweilige Dosierventil weiter geschlossen.

Die Auslassöffnung zum Auslassen der Dosiermenge an Süßwarenmasse liegt definitionsgemäß am Ende des Strömungswegs der Süßwarenmasse durch die Süßwarenmassendosiereinheit. Das Dosierventil und das Sperrventil liegen jeweils stromaufwärts der Auslassöffnung. Eine erste mögliche Anordnung ist, dass das Dosierventil stromabwärts des Sperrventils und somit benachbart zu der Auslassöffnung angeordnet ist. Es ist aber auch möglich, dass das Sperrventil stromabwärts des Dosierventils und somit benachbart zu der Auslassöffnung angeordnet ist. Des Weiteren ist es möglich, dass weitere Ventile oder andere Bauteile zwischen der Auslassöffnung, dem Dosierventil und dem Sperrventil angeordnet sind. Das Sperrventil und das Dosierventil sind aber separate Bauteile.

Das dosierte Volumen an Süßwarenmasse kann beispielsweise durch ein optisches Messverfahren festgestellt werden. Ein Beispiel hierfür ist die Lasertriangulationsvermessung. Andere Messverfahren sind aber ebenfalls möglich.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Auslassöffnung die Rede ist, ist dies so zu verstehen, dass genau eine Auslassöffnung, zwei Auslassöffnungen oder mehr Auslassöffnungen vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine perspektivische Ansicht einer beispielhaften Ausführungsform einer neuen Vorrichtung zum Dosieren einer Süßwarenmasse mit einer Mehrzahl von Süßwarenmassendosiereinheiten im Einsatz über einem Förderband.
- **Fig. 2**: zeigt eine perspektivische Ansicht eines Teils der Vorrichtung aus Fig. 1 von vorne.
- **Fig. 3**: zeigt eine perspektivische Ansicht des Teils der Vorrichtung aus Fig. 1 von hinten.
- **Fig. 4**: zeigt eine Ansicht der Rückseite des Teils der Vorrichtung gemäß Fig. 1.
- **Fig. 5**: zeigt eine Längsschnittansicht des Teils der Vorrichtung gemäß Fig. 1.
- **Fig. 6**: zeigt eine Querschnittansicht des Teils der Vorrichtung gemäß Fig. 1.
- **Fig. 7**: zeigt eine perspektivische Ansicht einer zweiten beispielhaften Ausführungsform des Teils der neuen Vorrichtung.
- **Fig. 8**: zeigt eine Seitenansicht des Teils der Vorrichtung gemäß Fig. 7.
- **Fig. 9**: zeigt eine Längsschnittansicht des Teils der Vorrichtung gemäß Fig. 7.
- **Fig. 10**: zeigt eine Querschnittansicht des Teils der Vorrichtung gemäß Fig. 7.

### FIGURENBESCHREIBUNG

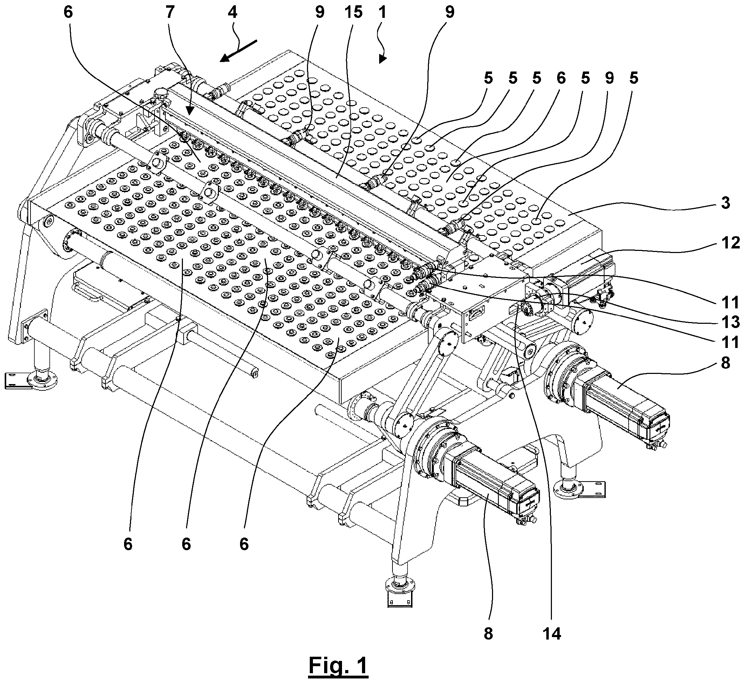

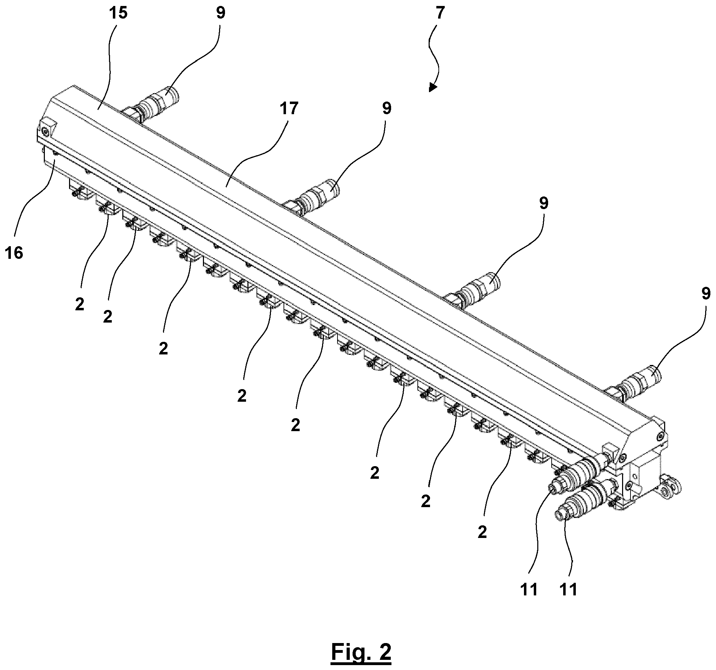

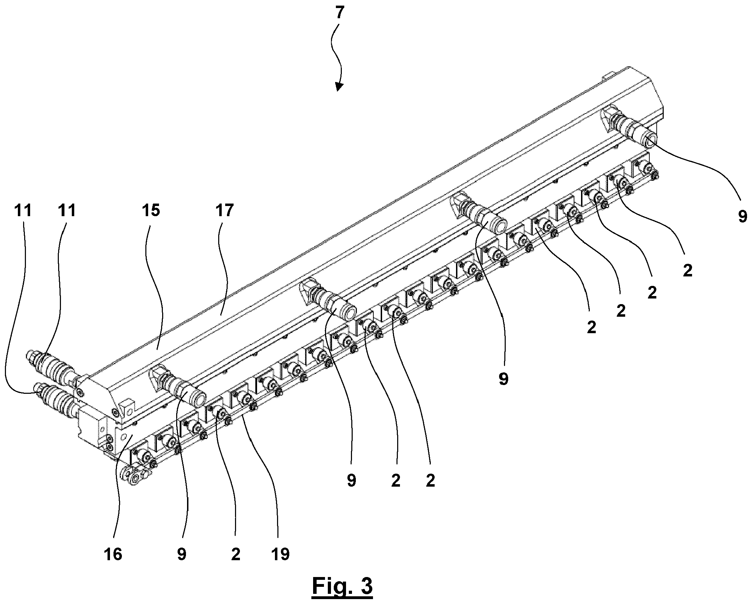

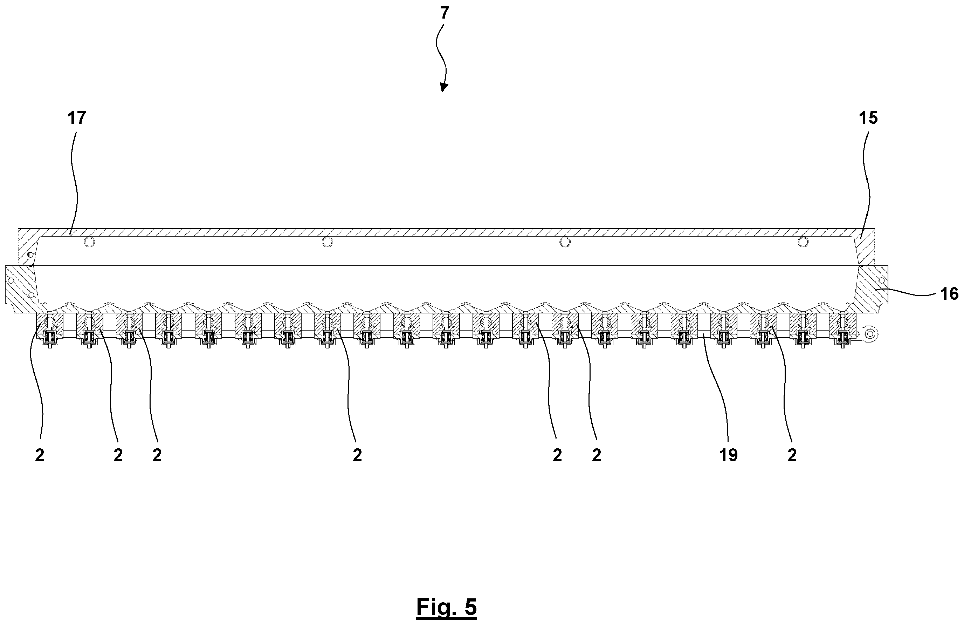

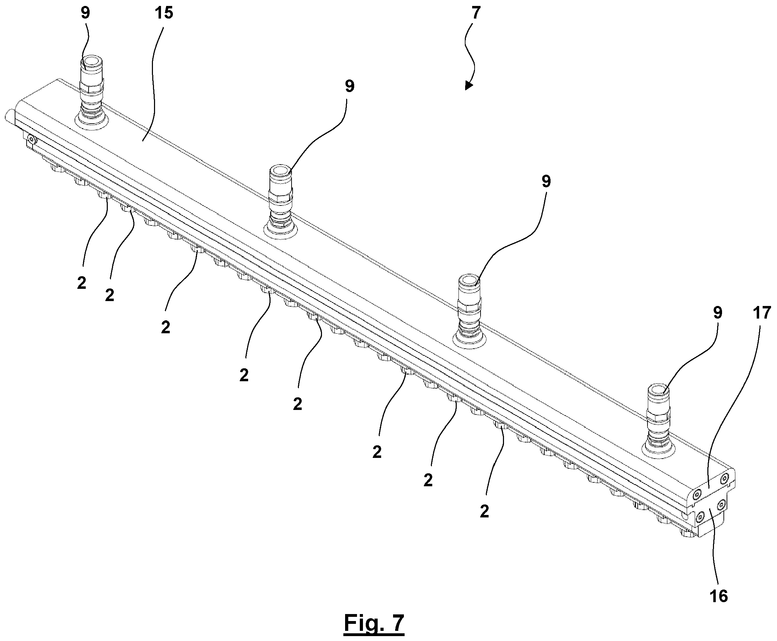

Fig. 1 bis 6 zeigen verschiedene Ansichten von Teilen einer ersten beispielhaften Ausführungsform einer neuen Vorrichtung 1 zum Dosieren einer Süßwarenmasse mit einer Mehrzahl von Süßwarenmassendosiereinheiten 2. Fig. 1 zeigt dabei einen größeren Teil der Vorrichtung 1, während Fig. 2 bis 5 Details der Vorrichtung 1 und Fig. 7 ein Detail einer Süßwarenmassendosiereinheit 2 zeigen.

Die Vorrichtung 1 weist ein Förderband 3 auf, das in einem Förderrichtungssinn 4 beweglich umlaufend angetrieben ist. Auf dem oberen Trum des Förderbands 3 liegt eine Vielzahl von Süßwarenstücken 5. Die Süßwarenstücke 5 befinden sich in sich senkrecht zum Förderrichtungssinn 4 erstreckenden Reihen und in sich im Förderrichtungssinn 4 (bzw. der Förderrichtung) erstreckenden Spalten. In jeder der ordnungsgemäß ausgebildeten Reihen befindet sich eine definierte Anzahl von Süßwarenstücken 5. Im vorliegenden Beispiel ist ersichtlich, dass u. a. in der im Förderrichtungssinn 4 gesehen dritten Reihe ein Süßwarenstück 5 fehlt. Es handelt sich hierbei um eine Fehlstelle 6. Aus Gründen der Erläuterung sind weitere Fehlstellen 6 gezeigt. In der Praxis tritt aber normalerweise eine geringere Anzahl von Fehlstellen 6 auf.

Etwa im hier im Förderrichtungssinn 4 gesehen mittleren Bereich des dargestellten Abschnitts des Förderbands 3 weist die Vorrichtung 1 einen Dosierbalken 7 auf. Der Dosierbalken 7 dient zur Aufbringung einer fließfähigen Süßwarenmasse auf die Süßwarenstücke 5. Dies ist in Fig. 1 anhand der unterschiedlich gewählten Darstellung der Süßwarenstücke 5 stromaufwärts und stromabwärts des Dosierbalkens 7 erkennbar.

Der Dosierbalken 7 wird mittels zwei Elektromotoren 8 vertikal und horizontal bewegt. Das Förderband 3 wird kontinuierlich im Förderrichtungssinn 4 bewegt. Der Dosierbalken 7 wird während eines Dosiertakts mit dem Förderband 3 und somit auch den Süßwarenstücken 5 mitbewegt, so dass die Dosierung der Süßwarenmasse auf das jeweilige Süßwarenstück 5 erfolgt. Dieser Vorgang ist für sich genommen aus dem Stand der Technik bekannt und wird daher im Folgenden nicht genauer beschrieben. Es wäre aber auch möglich, dass das Förderband 3 getaktet angetrieben und der Dosierbalken 7 feststehend ist.

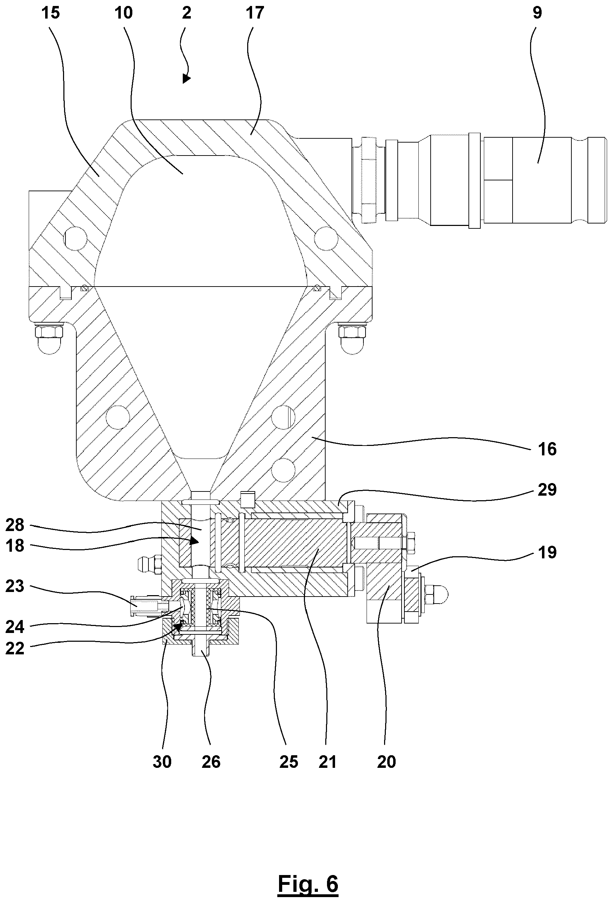

Der Dosierbalken 7 weist eine Mehrzahl von Masseanschlüssen 9 auf, durch die die Süßwarenmasse in ein Reservoir 10 (siehe Fig. 6) gelangt. Der Dosierbalken 7 weist weiterhin Wasseranschlüsse 11 auf, über die Wasser (oder ein anderes Temperiermedium) in den Dosierbalken 7 gelangt bzw. aus diesem wieder austritt. Durch das Temperiermedium wird die gewünschte Temperatur der in dem Reservoir 10 enthaltenen Süßwarenmasse erreicht.

In Fig. 1 ist weiterhin erkennbar, dass die Vorrichtung 1 einen Motor 12, insbesondere einen Servomotor, einen Exzenter 13 und eine Schubstange 14 aufweist. Diese Bauteile dienen zur Betätigung der Sperrventile der Süßwarenmassendosiereinheiten 2, was unterhalb weiter beschrieben wird.

In Fig. 2 bis 5 sind verschiedene Ansichten des Dosierbalkens 7 aus Fig. 1 dargestellt. Der Dosierbalken 7 weist ein Gehäuse 15 auf, an dem die Anschlüsse 9, 11 angeordnet sind. In dem Gehäuse 15 ist u. a. das Reservoir 10 gebildet.

Unterhalb des Gehäuses 15 weist der Dosierbalken 7 eine Mehrzahl der Süßwarenmassendosiereinheiten 2 auf. Die Anzahl der Süßwarenmassendosiereinheiten 2 entspricht der Anzahl von Süßwarenstücken 5 in einer Reihe auf dem Förderband 3. Aus Gründen der Übersichtlichkeit sind in den Fig. 2 bis 5 nur beispielhaft einige der Süßwarenmassendosiereinheiten 2 mit diesem Bezugszeichen gekennzeichnet. Aus diesem Grund sind auch die einzelnen Komponenten der Süßwarenmassendosiereinheiten 2 nur in der Detailansicht der Fig. 6 mit Bezugszeichen gekennzeichnet.

Fig. 6 zeigt eine beispielhafte Ausführungsform der neuen Süßwarenmassendosiereinheit 2. Das Gehäuse 15 weist ein Unterteil 16 und einen Deckel 17 auf. Im Inneren des Gehäuses 15 ist das Reservoir 10 gebildet. Über den Masseanschluss 9 gelangt Süßwarenmasse in das Reservoir 10.

Stromabwärts des Reservoirs 10 weist die Süßwarenmassendosiereinheit 2 ein Sperrventil 18 zum abwechselnden Öffnen und Schließen auf. Das Sperrventil 18 weist ein (eigenes) Sperrventilgehäuse 29 auf. Bei dem Sperrventil 18 handelt es sich um ein mechanisch betätigtes Ventil. Im vorliegenden Beispiel handelt es sich um ein Drehkolbenventil. Es könnte sich aber auch um eine andere Bauform eines Sperrventils 18 handeln.

Das Sperrventil 18 wird taktweise geöffnet und geschlossen. Das Sperrventil 18 ist während des Dosiertakts der Süßwarenmassendosiereinheit 2 und der Vorrichtung 1 geöffnet und ansonsten geschlossen. Die Betätigung des Sperrventils 18 erfolgt im vorliegenden Fall gemeinsam mit allen anderen Sperrventilen 18 der anderen Süßwarenmassendosiereinheiten 2 der Vorrichtung 1. Die Betätigung erfolgt über eine Schubbewegung einer Koppelstange 19, die durch den Motor 12, den Exzenter 13 und die Schubstange 14 ausgelöst wird. Die Drehung der Koppelstange 19 wird über einen Anlenkhebel 20 auf einen Drehkolben 21 des Sperrventils 18 übertragen. In dem Drehkolben 21 befindet sich eine Durchlassbohrung 28, die je nach Stellung des Drehkolbens 21 an das Reservoir 10 angeschlossen oder von diesem getrennt ist. In dieser Weise nimmt das Sperrventil 18 seine geöffnete Stellung und seine geschlossene Stellung ein.

Stromabwärts des Sperrventils 18 ist ein zusätzliches und separates Dosierventil 22 angeordnet. Das Dosierventil 22 weist ein (eigenes) Dosierventilgehäuse 30 auf. Das Dosierventil 22 dient zum Einstellen der Dosiermenge an Süßwarenmasse, die letztendlich auf die Süßwarenstücke 5 gelangt. Bei dem Dosierventil 22 handelt es sich um ein durch Druck beaufschlagtes Schlauchquetschventil. Das Dosierventil 22 weist einen Anschluss 23 auf, über den ein Druckmedium, insbesondere Luft oder eine Flüssigkeit, in den Innenraum des Dosierventils 22 gelangt. Dort ist eine Druckkammer 24 gebildet, über die ein einstellbarer Druck auf einen Schlauchabschnitt 25 einwirkt. Je nach Druckniveau verengt oder erweitert dann der Schlauchabschnitt 25 den für den Durchfluss der Süßwarenmasse zur Verfügung stehenden freien Querschnitt. In dieser Weise wird das Dosiervolumen geregelt. In Fig. 6 ist das Dosierventil 22 in seinem drucklosen Zustand gezeigt, in dem die freie Querschnittsfläche maximal groß ist.

Stromabwärts des Dosierventils 22 ist eine Auslassöffnung 26 angeordnet, die zum Auslassen der Dosiermenge an Süßwarenmasse aus der Süßwarenmassendosiereinheit 2 dient.

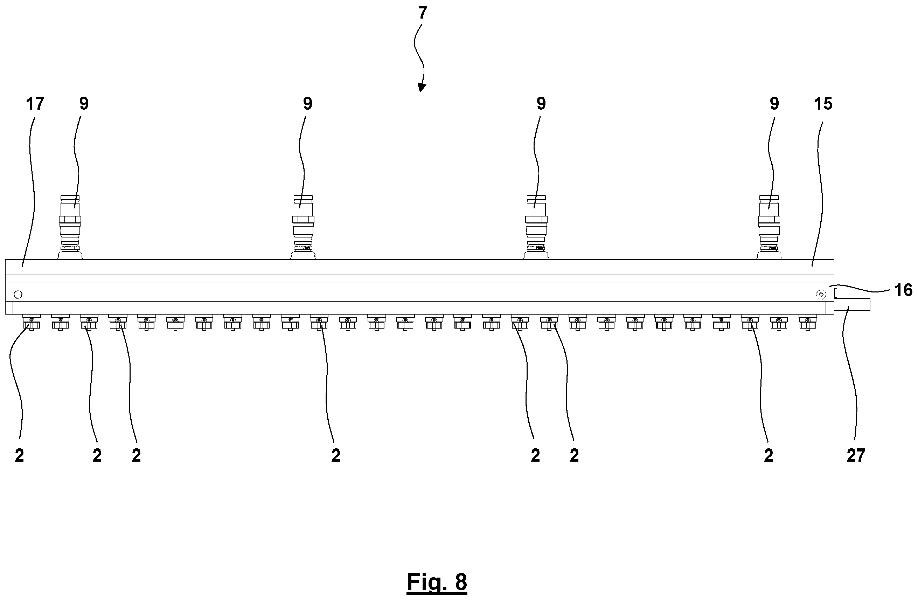

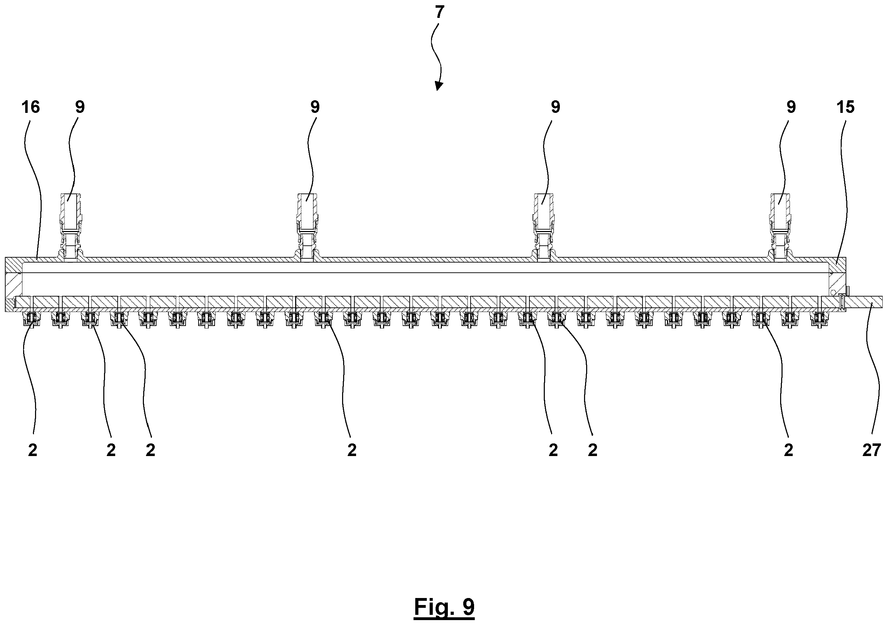

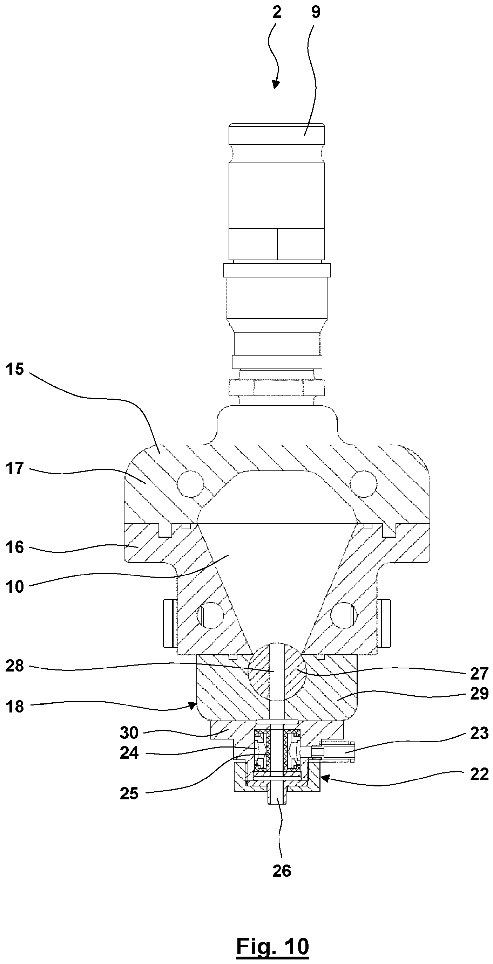

Fig. 7 bis 10 zeigen entsprechende Ansichten einer zweiten beispielhaften Ausführungsform der neuen Vorrichtung 1, des Dosierbalkens 7 und der Süßwarenmassendosiereinheiten 2. Zwecks Vermeidung unnötiger Wiederholungen wird bezüglich der übereinstimmenden Merkmale auf die oberhalb angegebenen Ausführungsformen verwiesen.

Im Unterschied zu dem Antrieb u. a. mit der Koppelstange 19 weist die Vorrichtung 1 hier eine Ventilwelle 27 auf, über die die Sperrventile 18 gemeinsam geöffnet und geschlossen werden.

### BEZUGSZEICHENLISTE

- 1: Vorrichtung
- 2: Süßwarenmassendosiereinheit
- 3: Förderband
- 4: Förderrichtungssinn
- 5: Süßwarenstücke
- 6: Fehlstelle
- 7: Dosierbalken
- 8: Elektromotor
- 9: Masseanschluss
- 10: Reservoir
- 11: Wasseranschluss
- 12: Motor
- 13: Exzenter
- 14: Schubstange
- 15: Gehäuse
- 16: Unterteil
- 17: Deckel
- 18: Sperrventil
- 19: Koppelstange
- 20: Anlenkhebel
- 21: Drehkolben
- 22: Dosierventil
- 23: Anschluss
- 24: Druckkammer
- 25: Schlauchabschnitt
- 26: Auslassöffnung
- 27: Ventilwelle
- 28: Durchlassöffnung
- 29: Sperrventilgehäuse
- 30: Dosierventilgehäuse

## Patentansprüche

1. Süßwarenmassendosiereinheit (2), mit
einer Auslassöffnung (26) zum Auslassen einer Dosiermenge an Süßwarenmasse aus der Süßwarenmassendosiereinheit (2),
einem durch Druck beaufschlagten Dosierventil (22) zum Einstellen der Dosiermenge, **gekennzeichnet durch**
ein zusätzliches Sperrventil (18) zum abwechselnden Öffnen und Schließen, wobei bei geschlossenem Sperrventil (18) keine Süßwarenmasse aus der Auslassöffnung (26) austritt.

2. Süßwarenmassendosiereinheit (2) nach Anspruch 1, **dadurch gekennzeichnet, dass** das Dosierventil (22) ein Schlauchquetschventil ist.

3. Süßwarenmassendosiereinheit (2) nach mindestens einem der vorhergehenden Ansprüche, **dadurch gekennzeichnet, dass** das Dosierventil (22) stufenlos regelbar ausgebildet ist.

4. Süßwarenmassendosiereinheit (2) nach mindestens einem der vorhergehenden Ansprüche, **dadurch gekennzeichnet, dass** das Dosierventil (22) während des Betriebs der Süßwaremassendosiereinheit (2) von Hand oder automatisch regelbar ausgebildet ist.

5. Süßwarenmassendosiereinheit (2) nach mindestens einem der vorhergehenden Ansprüche, **dadurch gekennzeichnet, dass** das Sperrventil (18) ein mechanisch betätigtes Ventil ist.

6. Süßwarenmassendosiereinheit (2) nach Anspruch 5, **dadurch gekennzeichnet, dass** das Sperrventil (18) ein Drehkolbenventil, Schieberventil oder Sitzventil ist.

7. Süßwarenmassendosiereinheit (2) nach mindestens einem der vorhergehenden Ansprüche, **dadurch gekennzeichnet, dass** das Sperrventil (18) taktweise geöffnet und geschlossen wird.

8. Vorrichtung (1) zum Dosieren einer Süßwarenmasse, **gekennzeichnet durch** eine Mehrzahl von nebeneinander angeordneten Süßwarenmassendosiereinheiten (2) nach mindestens einem der vorhergehenden Ansprüche.

9. Vorrichtung (1) nach Anspruch 8, **dadurch gekennzeichnet, dass** die Sperrventile (18) der Süßwarenmassendosiereinheiten (2) so ausgebildet sind, dass sie gemeinsam geöffnet und geschlossen werden.

10. Vorrichtung nach Anspruch 8, **dadurch gekennzeichnet, dass** die Sperrventile (18) der Süßwarenmassendosiereinheiten (2) so ausgebildet sind, dass sie unabhängig voneinander geöffnet und geschlossen werden können.

11. Vorrichtung (1) nach Anspruch 10, **gekennzeichnet durch** eine Fehlerdetektionsvorrichtung, die so ausgebildet ist, dass sie bei Vorliegen eines Fehlers ein Fehlersignal ausgibt und aufgrund des Fehlersignals das dem Fehler zugeordnete Sperrventil (18) geschlossen wird.

12. Vorrichtung (1) nach mindestens einem der Ansprüche 8 bis 11, **gekennzeichnet durch** eine Regeleinheit für die Dosierventile (22) der Süßwarenmassendosiereinheiten (2), wobei die Regeleinheit und die Dosierventile (22) so ausgebildet sind, dass die Dosierventile (22) unabhängig voneinander regelbar sind.

13. Vorrichtung (1) nach Anspruch 8, **gekennzeichnet durch** eine Regeleinheit für die Dosierventile (22) der Süßwarenmassendosiereinheiten (2) und eine Fehlerdetektionsvorrichtung, wobei
die Regeleinheit und die Dosierventile (22) so ausgebildet sind, dass die Dosierventile (22) unabhängig voneinander regelbar sind,
die Sperrventile (18) der Süßwarenmassendosiereinheiten (2) so ausgebildet sind, dass sie gemeinsam geöffnet und geschlossen werden,
die Fehlerdetektionsvorrichtung so ausgebildet ist, dass sie bei Vorliegen eines Fehlers ein Fehlersignal ausgibt und aufgrund des Fehlersignals das dem Fehler zugeordnete Dosierventil (22) vollständig geschlossen wird.

14. Vorrichtung (1) nach mindestens einem der Ansprüche 8, 11 und 12, **gekennzeichnet durch** eine Regeleinheit für die Dosierventile (22) der Süßwarenmassendosiereinheiten (2), wobei
die Regeleinheit und die Dosierventile (22) so ausgebildet sind, dass die Dosierventile (22) unabhängig voneinander regelbar sind, und
a1. die Sperrventile (18) der Süßwarenmassendosiereinheiten (2) so ausgebildet sind, dass sie gemeinsam geöffnet und geschlossen werden, und
a2. die Regeleinheit so ausgebildet ist, dass bei geöffneten Sperrventilen (18) und geöffnetem Dosierventil (22) einer ersten Süßwarenmassendosiereinheit (2) und geschlossenem Dosierventil (22) einer benachbarten zweiten Süßwarenmassendosiereinheit (2) das Dosierventil (22) der ersten Süßwarenmassendosiereinheit (2) weiter geschlossen wird, oder
b1. die Sperrventile (18) der Süßwarenmassendosiereinheiten (2) so ausgebildet sind, dass sie unabhängig voneinander geöffnet und geschlossen werden können, und
b2. die Regeleinheit so ausgebildet ist, dass bei geöffnetem Sperrventil (18) einer ersten Süßwarenmassendosiereinheit (2) und geschlossenem Sperrventil (18) einer benachbarten zweiten Süßwarenmassendosiereinheit (2) das Dosierventil (22) der ersten Süßwarenmassendosiereinheit (2) weiter geschlossen wird.
